# EUROPEAN PATENT APPLICATION

(11) **EP 3 495 078 A1**
(43) Date of publication of application: **12.06.2019**
(21) Application number: 18206177.0
(22) Date of filing: 14.11.2018
(51) Int. Cl.: B22F 3/105, B22F 5/00, B22F 5/04, B33Y 10/00, B33Y 50/00

(54) **LASER LAYING PATTERNING**

(30) Priority: 11.12.2017 GB 201720597
(71) Applicant: Rolls-Royce plc, London SW1E 6AT (GB)
(72) Inventor: Stapleton, David, Derby, Derbyshire DE24 8BJ (GB); White, Jan, Derby, Derbyshire DE24 8BJ (GB)
(74) Representative: Rolls-Royce plc

(57) **Abstract**

A method of processing a layer of material in a layer-by-layer additive manufacturing process is provided, wherein successive layers of flowable material are formed and a laser beam is scanned across a selected area of each layer to consolidate the material in said selected area. The method comprises providing a first raster path for a laser beam, the first raster path having a defined spacing between successive passes, and providing at least one further raster path for a laser beam, wherein the or each further raster path has the same defined spacing between successive passes as the first raster path and is offset from the first raster path in the direction of said defined spacing by a distance that is less than said defined spacing, such that the laser beam irradiates the entire selected area in a single pass over the first path and the or each further path.

## Description

The present disclosure concerns the field of additive layer manufacturing, and more specifically to powder bed fusion.

Powder bed fusion is a form of additive layer manufacturing (ALM) where thermal energy from a laser or electron beam is used to fuse specific areas of a bed of powder and build up a three-dimensional component. The process typically involves raster passes, with the laser moving successively back and forth across the area/region of interest to melt/fuse the powder as required.

Many standard raster strategies are used in industry. However, these existing raster scanning strategies can create undesirable thermal input scenarios in the material. The thermal input and thermal history defines the residual stress in the component, and if not correctly managed can lead to unacceptably high residual stress possibly leading to component distortion or even failure. The metallurgical response to the thermal input can also induce micro cracking, which is similarly undesirable in its effects and presence.

WO 2016/079496 attempts to address certain problems with known techniques by splitting a scanning path into discrete areas that are scanned in multiple passes along the same path. For example, an entire path can be split into a number of segments along its length, which for reference we will successively number 1,2,3,4,5. A pulsed laser then melts the odd numbered segments (1,3,5, etc) in a first pass, before the even numbered segments (2,4, etc) in-between are melted in a second pass.

The need for multiple results in a slower processing time. Furthermore, the method suggested in WO 2016/079496 can only be implemented using pulsed laser systems, but many manufacturers prefer to use continuous wave lasers (where energy is output constantly rather than in discrete pulses).

According to a first aspect there is provided a method of processing a layer of material in a layer-by-layer additive manufacturing process, wherein successive layers of flowable material are formed and a laser beam is scanned across a selected area of each layer to consolidate the material in said selected area, the method comprising providing a first raster path for a laser beam, the first raster path having a defined spacing between successive passes, and providing at least one further raster path for a laser beam, wherein the or each further raster path has the same defined spacing between successive passes as the first raster path and is offset from the first raster path in the direction of said defined spacing by a distance that is less than said defined spacing, such that the laser beam irradiates the entire selected area in a single pass over the first path and the or each further path.

The first raster path may have a first raster path width. The defined spacing may be greater than the first raster path width. The first raster path width may relate to a width of melting when the raster path is followed by a laser beam. The defined spacing may be twice the first raster path width. The defined spacing may be a multiple of the first raster path width. The first raster path and the or each further raster path may be interleaved (for example passes of a further raster path may be located between passes of the first raster path).

The laser beam may be a continuous laser beam. The first raster path may be followed by a laser beam performing back and forth scanning. The laser beam may be an intermittent laser beam. The first raster path may be followed by a laser beam performing unidirectional scanning. The first raster path may be followed by a laser beam along passes in one, two or more directions.

The flowable material may be powder suitable for use in additive manufacturing, for example a metal powder such as a nickel superalloy powder.

The first raster path and the or each further raster path may be followed by a single laser beam, provided by a single source. Alternatively multiple laser beams and/or multiple sources may be used.

Alternatively, the first raster path and the or each further raster path may be followed by separate laser beams. For example, a first raster path may be followed by a first laser beam, and a second, further, raster path may be followed by a second separate/distinct laser beam. A time delay may be introduced between the paths so that the second laser beam does not immediately follow the first.

The offset distance may be a defined fraction or percentage of the defined spacing. For example, the offset distance may be half, one third, one quarter, one fifth, two thirds, two fifths, three quarters, three fifths or four fifths of the defined spacing. The offset distance may be the defined spacing divided by the number of paths, wherein the number of paths is the number of further raster paths plus one.

The method provides benefits when only one further path is used. However, the method may provide a first raster path and at least two further raster paths. The offset between each successive path may be constant, such that the offset from the first path may increase for uniformly for each further path. For example, where two further paths are provided, the total offset for the first further path (second path overall) may be one third of the defined spacing, and the total offset for the second further path (third path overall) may be two thirds of the defined spacing.

Additional further raster paths could be provided if desired. With higher numbers of paths it would be possible to not simply increase the offset from the first path with each successive path, but to instead interlace paths to some degree. For example, with three further paths (four paths in total), the offset from the first path for successive paths could be one half, then one quarter, then three quarters, of the defined spacing.

Additionally the first raster path and/or a further raster path may be remelted or partially remelted during the step of providing a further raster path. Advantageously remelting or partially remelting may improve the levels of porosity in a component.

The method may further comprising the initial step of calculating the defined spacing and the or each offset distance based on one or more of the laser beam diameter, the laser beam power and the properties of the flowable material. The calculations could be based on simulations or experimental data.

Also provided is an additive manufacturing apparatus comprising a build table, a source of flowable material, a laser source (or sources, for example in a multilaser or multisource system) and a control unit for controlling the laser source (or sources), wherein, in use, layers of flowable material are successively formed across the build table, the laser source(s) directs a laser beam onto each layer to selectively solidify the material in a defined area, and the control unit directs the laser beam to successively follow a first raster path having a defined spacing between successive passes, and at least one further raster path, the or each further raster path having the same defined spacing between successive passes as the first raster path and being offset from the first raster path in the direction of said defined spacing by a distance that is less than said defined spacing.

The apparatus may comprise, for example, a vertically movable build table that can be gradually lowered, and a scraper for moving a suitable powder (such as a metal powder) from a powder reservoir onto the table each time the table is lowered to create a new powder layer. A powder collection area may also be provided to catch any surplus powder as successive layers are formed.

The apparatus may further comprise a memory and a processor for accessing the memory and providing instructions to the control unit.

The memory may contain a database of raster paths (for example number of paths, direction of paths, timing of paths). A suitable raster path may then simply be selected by a user. The memory may contain information required to operate the claimed method, for example parameters as claimed herein.

Alternatively, or additionally, the memory may contain a database of defined spacings and offset distances and the processor may simulate the results of different combinations and defined spacings and offset distances to provide optimum raster paths to the control unit. The simulations may be based on input data, for example relating to properties of the laser, of the flowable material, and/or of the part being produced.

Also provided is a system comprising an additive manufacturing apparatus as previously described and computer readable media containing computer readable instructions for the additive manufacturing apparatus.

This described method, apparatus and system provide a novel Laser Scanning pattern for an ALM process. The pattern introduces a pause time between adjacent tracks with little or no process time penalty. This homogenises and alters thermal history compared to standard raster scanning strategies, such that cracking susceptible processing zones can be avoided.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

Embodiments will now be described by way of example only, with reference to the accompanying Figures, in which:
**Figure 1** is a sectional side view of a gas turbine engine;
**Figure 2** is an indicative perspective view of an additive manufacturing machine illustrating a typical additive layer manufacturing process;
**Figures 3a-3f** are schematic views of a selection of known raster scanning patterns; and
**Figures 4a-4c** are schematic views illustrating the scanning strategy of the present invention.

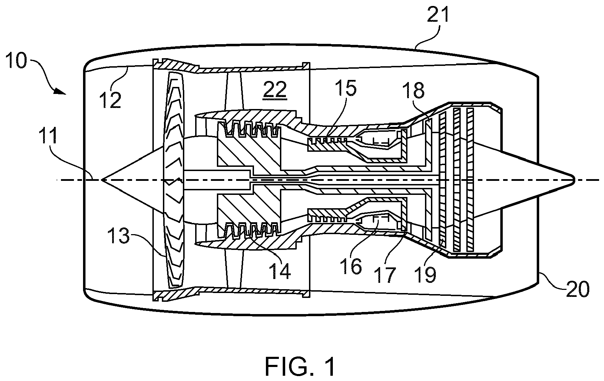

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Additive layer manufacturing is an increasingly common technology which may be used in the manufacture of various engine components.

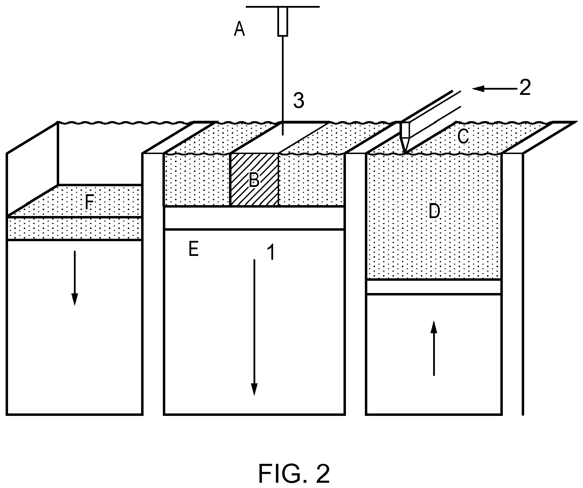

Figure 2 shows a typical additive layer manufacturing (ALM) process in an additive manufacturing machine. The machine comprises a laser source A, a powder source D, a movable working plate or build table E, a scraper C and a powder collection area F.

In use, the build table E is first lowered in the order of 20-200 µm, as indicated by arrow 1. The scraper C moves across the build table, as shown by arrow 2, and deposits a fine layer of powder from the powder source D, proportional to the build table E lowering distance. In step 3, the laser A is used to selectively melt an area of the powder bed, by using a scanning pattern to fill the area to consolidate. By repeating steps 1-3 as described, a three-dimensional component B can be produced.

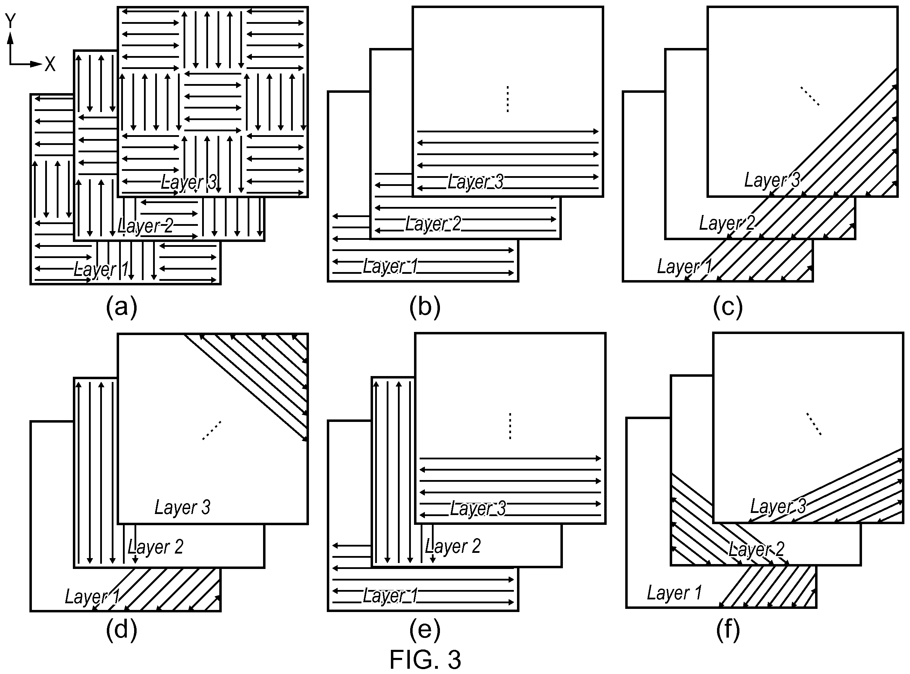

Figures 3a to 3f illustrate a number of known scanning patterns. In each case, three successive layers of scanning are shown to illustrate how the path of the laser changes between successive layers during the ALM process.

Figure 3a shows Island scanning, where the total area is divided into smaller 'islands'. Figures 3b and 3c respectively show basic line scanning and 45° line scanning. Figure 3d shows 45° rotate scanning, where the laser path angle is changed by 45° between each successive layer. This effectively provides a scanning pattern which alternates between line scanning and 45 ° scanning. Figure 3e shows 90° rotate scanning, where the change in laser path angle between successive layers is 90° and Figure 3f shows 67° rotate scanning.

Each of the scanning strategies above involves 'rastering' (moving the laser back and forth) across the scanning area, from one side of the melting area to the other, with each path being immediately adjacent a previous path. In some methods, such as that shown in 3a, the area is subdivided into sub regions or islands, and each sub region is scanned with its own raster strategy. The successive paths, however, are still immediately adjacent. Each raster scan is scanned on its own deposited layer.

The scanning strategy used has a bearing on the thermal response of the material, which in turn influences defect mechanisms and can ultimately determine if certain materials can be processed. Existing raster scanning strategies, such as those shown in Figures 3a to 3f, can create undesirable thermal input scenarios in the material. The thermal input and thermal history defines the residual stress in the component. If residual stress is too high, then it can cause component distortion and, in the case of some alloys, can induce cracking and complete component failure. The metallurgical response to the thermal input can also induce micro cracking, which is similarly undesirable in its effects and presence.

This application focuses on improving the laser scanning strategy aspect of the process. More specifically, during the laser melting process a pattern of laser movement is introduced to alter the thermal input into the component and reduce the potential cracking problem. The raster strategy is modified to produce a different thermal history, which has implications and advantages for processing, for example, nickel superalloys.

Fundamentally, the scanning area is divided into two or more separate scanning lengths, or tracks, that are separated by a set distance (hatch spacing). The laser follows each of these paths in order, therefore travelling multiple times across the component, in order to fully melt the area.

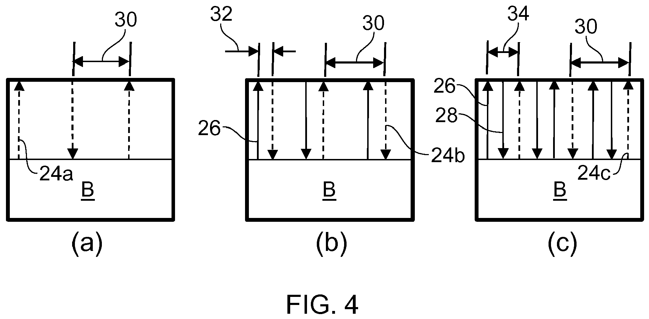

Figures 4a to 4c illustrate this process. The active path across a component B in each Figure is shown by the three broken arrows 24, with previous paths shown as solid arrows 26,28 in Figures 4b and 4c. The hatch spacing 30 is constant between stages. The stages are explained below.

Figure 4a shows the initial melting strategy whereby the laser is scanned in a raster strategy across the scanning area following a path 24a with extremely large hatch spacing 30, from left to right.

Once the first pass has been completed, the scanning strategy is performed again across the whole component B, as shown in Figure 4b. The hatch spacing 30 is the same as before, but in stage 2 an offset 32 is provided in the x-axis (perpendicular to the scanning direction) compared to stage 1. This offset 32 serves to space the active path 24b of stage 2 from the previous path 26 followed in stage 1. It will be understood that the initial direction of the active path 24b in the second stage is determined simply based on the side of the component B where the laser source finished at the end of the first pass. Processing delays are therefore minimised.

Stage 2 is then repeated with another offset 34 relative to the first scan path 26, as illustrated in Figure 4c. The offset 34 is greater than that used for the second scan path 28, so that the active path 24c is also spaced from the second scan path 28. Once again, the initial direction of the active path 24c is determined based on the finishing position of the laser source at the end of the second pass.

It can be seen in the images above that the final part is made of several scan tracks that are adjacent and equally spaced apart across the width of the component scanning area. As illustrated, three passes are used, with the first offset 32 being one third of the hatch pacing 30 and the second offset 34 being two thirds of the hatch spacing 30. The relative offset between each successive pass is therefore one third of the hatch spacing 30, and the third active path 24c in Figure 4c fills the gaps that remain between the previous scanning vectors 26,28. It should be understood that different numbers of stages/passes may be required depending on the chosen hatch spacing 30 and offsets 32,34, but that the process should simply be repeated until no more gaps remain between the scanning vectors.

Following the methodology as described allows a time for the laser tracks to cool significantly compared to prior conventional scanning strategies. This is a significant alteration to the thermal input. In a conventional raster scan, the laser travels left to right by a constant distance in a single continuous path. As a result, the previous track heating can influence the next track as they are immediately next to each other and are scanned in sequence. The method described above effectively adds a pause between adjacent tracks allowing them to cool, but has little or no penalty on process times because the total distance travelled with the laser active is substantially unchanged.

The effective pause times are beneficial because they contributing to reducing cracking behaviour in materials, for example in nickel superalloys, processed by selective laser melting. There are many cracking mechanisms that nickel superalloys exhibit that are in part determined by the thermal input. By introducing a pause time the thermal history is altered, allowing thermal processing zones where ductility dip or segregation cracking occur to be avoided.

The pause times also allow the thermal history to be more homogenous on the component B. The heating of the previous track now does not affect the next track, leading to more homogenous properties over the scanned layer. This increases the repeatability and reliability of the structural integrity of the scan.

The pause time is introduced with little or no penalty on processing time, as the laser A travels and creates a track further along the component B.

It will be understood that the invention is not limited to the embodiments above-described and various modifications and improvements can be made without departing from the concepts described herein.

For example, although described in relation to a whole component/area, the same technique could be extrapolated to island scanning. The islands can be considered as individual areas, with each island being scanned using the strategy described in the application.

Except where mutually exclusive, any of the features may be employed separately or in combination with any other features and the disclosure extends to and includes all combinations and sub-combinations of one or more features described herein.

## Claims

1. A method of processing a layer of material in a layer-by-layer additive manufacturing process, wherein successive layers of flowable material are formed and a laser beam is scanned across a selected area of each layer to consolidate the material in said selected area, the method comprising:
providing a first raster path for a laser beam, the first raster path having a defined spacing between successive passes, and
providing at least one further raster path for a laser beam,
wherein the or each further raster path has the same defined spacing between successive passes as the first raster path and is offset from the first raster path in the direction of said defined spacing by a distance that is less than said defined spacing, such that the laser beam irradiates the entire selected area in a single pass over the first path and the or each further path.

2. A method according to claim 1, wherein the first raster path and the or each further raster path are followed by a single laser beam.

3. A method according to claim 1, wherein the first raster path and the or each further raster path are followed by a separate laser beam.

4. A method according to any preceding claim, wherein the offset distance is a defined fraction of the defined spacing.

5. A method according to any preceding claim, wherein the method provides a first raster path and two further raster paths.

6. A method according to any preceding claim, further comprising the initial step of calculating the defined spacing and the or each offset distance based on one or more of the laser beam diameter, the laser beam power and the properties of the flowable material.

7. An additive manufacturing apparatus comprising a build table, a source of flowable material, a laser source and a control unit for controlling the laser source, wherein, in use:
layers of flowable material are successively formed across the build table;
the laser source directs a laser beam onto each layer to selectively solidify the material in a defined area; and
the control unit directs the laser beam to successively follow a first raster path having a defined spacing between successive passes, and at least one further raster path, the or each further raster path having the same defined spacing between successive passes as the first raster path and being offset from the first raster path in the direction of said defined spacing by a distance that is less than said defined spacing.

8. An additive manufacturing apparatus according to claim 7, further comprising a memory and a processor for accessing the memory and providing instructions to the control unit.

9. An additive manufacturing apparatus according to claim 8, wherein the memory contains a database of raster paths.

10. An additive manufacturing apparatus according to claim 8 or 9, wherein the memory contains a database of defined spacings and offset distances and wherein the processor simulates the results of different combinations and defined spacings and offset distances to provide optimum raster paths to the control unit.

11. A system comprising an additive manufacturing apparatus according to any of claims 7 to 10 and computer readable media containing computer readable instructions for the additive manufacturing apparatus.
